# EUROPÄISCHE PATENTSCHRIFT

(11) **EP 0 438 762 B1**
(45) Veröffentlichungstag und Bekanntmachung des Hinweises auf die Patenterteilung: **16.03.1994**
(21) Anmeldenummer: 90125157.9
(22) Anmeldetag: 21.12.1990
(51) Int. Cl.: C08G 69/20

(54) **Katalysatorlösung für die anionische Polymerisation von Lactamen und deren Verwendung für die anionische Polymerisation von Caprolactam**
Catalyst solution for anionic lactam polymerisation and its use for anionic polymerisation of caprolactam
Solution de catalyseur pour la polymérisation anionique de lactames et leur utilisation pour la polymérisation anionique de caprolactame

(30) Priorität: 26.01.1990 DE 4002260
(43) Veröffentlichungstag der Anmeldung: 31.07.1991
(73) Patentinhaber: BASF Aktiengesellschaft, 67063 Ludwigshafen (DE)
(72) Erfinder: Fuchs, Hugo, Dr., W-6700 Ludwigshafen (DE); Pellkofer, Erich, W-6704 Mutterstadt (DE); Ritz, Josef, Dr., W-6700 Ludwigshafen (DE)

(56) Entgegenhaltungen:
- DE-A- 1 495 791
- DE-A- 2 230 732
- DE-A- 2 248 664
- US-A- 3 308 099

## Beschreibung

Die anionische Polymerisation von Lactamen, die im Gegensatz zur Polykondensation nicht über die entsprechende ω-Aminocarbonsäure, sondern über das Anion des Lactams verläuft, wird in Gegenwart von alkalischen Katalysatoren durchgeführt. Geeignete und häufig verwendete Katalysatoren sind Alkalilactamate, gelöst in Caprolactam. Solche Katalysatoren sind fest und müssen vor ihrer Verwendung aufgeschmolzen werden.

Aus der US-PS 3 575 938 ist auch schon bekannt, daß man Lösungen von Alkalilactamaten in N-disubstituierten Carbonsäureamiden als Katalysatorlösungen verwendet. Solche Lösungen neigen jedoch bei längerem Lagern bei Temperaturen unterhalb Raumtemperatur, was jahreszeitig bedingt ist, eine feste Masse zu bilden, die vor ihrer Verwendung wieder verflüssigt werden muß.

Ferner ist aus der DE-OS 2 230 732 bekannt, als Katalysatorlösungen Alkalilactamat, gelöst in Caprolactam, und 2-Pyrrolidon mit einem Zusatz von Alkanolen mit 1 bis 12 Kohlenstoffatomen zu verwenden. Solche Lösungen neigen ebenfalls bei der Lagerung unterhalb Raumtemperatur in den festen Zustand überzugehen.

Es war deshalb die technische Aufgabe gestellt, für die Polymerisation von Lactamen geeignete Katalysatorlösungen zur Verfügung zu stellen, die auch bei längerem Lagern unterhalb Raumtemperatur flüssig bleiben und bei ihrer Verwendung kurze Polymerisationszeiten ermöglichen und Polymerisate mit niedrigem Extraktgehalt ergeben.

Diese Aufgabe wird gelöst, durch Katalysatorlösungen enthaltend als wesentliche Bestandteile 30 bis 45 Gew.-% eines Lactams mit mindestens 7 Ringgliedern mit einem Gehalt an Alkalimetall von 3 bis 5 Gew.-% in Form eines Alkalilactamats,
3 bis 8 Gew.-% 2-Pyrrolidon,
15 bis 20 Gew.-% Poly-C₂-C₄-alkylenglykol mit einem mittleren Molekulargewicht von 250 bis 350,
bis zu 5 Gew.-% eines primären und/oder sekundären Mono- und/oder Polyamins mit einem Siedepunkt unter Normaldruck oberhalb 250°C und bis zu 40 Gew.-% eines aromatischen Kohlenwasserstoffs mit einem Siedepunkt von 80 bis 145°C,
wobei sich die Gewichtsprozente jeweils auf 100 % ergänzen.

Die neue Katalysatorlösung hat den Vorteil, daß sie nicht nur bei Raumtemperatur flüssig ist, sondern auch bei längerem Lagern bei einer Temperatur unterhalb Raumtemperatur flüssig bleibt. Weiter hat die neue Katalysatorlösung den Vorteil, daß sie kurze Polymerisationszeiten ermöglicht. Ferner hat die neue Katalysatorlösung den Vorteil, daß die erzeugten Polymerisate einen niedrigen Gehalt an extrahierbaren Anteilen aufweisen.

Die erfindungsgemäße Katalysatorlösung enthält

30 bis 45 Gew.-% eines Lactams mit mindestens 7 Ringgliedern mit einem Gehalt an Alkalimetall von 3 bis 5 Gew.-% in Form von Alkalilactamat. Geeignete Lactame sind beispielsweise Caprolactam, Caprylactam oder Laurinlactam. Besonders bevorzugt wird Caprolactam. Geeignete Alkalimetalle sind beispielsweise Natrium oder Kalium, wobei Natrium bevorzugt verwendet wird.

Weiter enthält die Katalysatorlösung 3 bis 8 Gew.-% 2-Pyrrolidon.

Darüber hinaus enthält die Katalysatorlösung 15 bis 20 Gew.-% Poly-C₂- bis C₄-alkylenglykol mit einem Molekulargewicht von 250 bis 350. Geeignet sind beispielsweise Polyethylenglykol, Polypropylenglykol, Polytetrahydrofuran oder deren Copolymere. Vorzugsweise wird Polyethylenglykol mit einem Molekulargewicht von 250 bis 350 verwendet.

Die Katalysatorlösung enthält ferner bis zu 5 Gew.-% primäre und/oder sekundäre Mono- und/oder Polyamine mit einem Siedepunkt unter Normaldruck oberhalb von 250°C. Vorteilhaft beträgt der Gehalt an solchen Aminen von 0,3 bis 5 Gew.-%. Geeignete Amine sind beispielsweise 2-Nonyl-1,10-diaminodecan, das aus Palmkernfettsäure in bekannter Weise hergestellte Palmkernfettamin, ein Gemisch primärer Amine mit einer geraden Kohlenstoffkette mit 12 bis 15 Kohlenstoffatomen, 2-Heptyl-1,10-diaminodecan, 4,4'-Diaminodiphenylmethan, 4,4'-Diaminodicyclohexylmethan oder 4,4'-Diaminodicyclohexylpropan. Besonders geeignet sind 4,4'-Diaminodiphenylmethan und 4,4'-Diaminodicyclohexylmethan.

Ferner enthält die Katalysatorlösung bis zu 40 Gew.-% eines aromatischen Kohlenwasserstoffs mit einem Siedepunkt von 80 bis 145°C. Geeignete Kohlenwasserstoffe sind beispielsweise Toluol, Ethylbenzol oder Xylol. Besonders bevorzugt wird Toluol verwendet. In der Regel beträgt der Gehalt an solchen Kohlenwasserstoffen 30 bis 40 Gew.-%. Die Summe der Gewichtsprozente der vorgenannten Katalysatorbestandteile ergänzt sich jeweils auf 100 Gew.-%.

Besonders vorteilhaft ist eine Katalysatorlösung, bestehend im wesentlichen aus 35 bis 40 Gew.-% Caprolactam mit einem Gehalt von 3 bis 4 Gew.-% Natrium in Form von Natriumcaprolactamat
4 bis 6 Gew.-% 2-Pyrrolidon,
16 bis 20 Gew.-% Polyethylenglykol mit einem mittleren Molekulargewicht von 250 bis 350, insbesondere 280 bis 320.
1,5 bis 2,5 Gew.-% 4,4'-Diaminodicyclohexylmethan und
bis zu 38,5 Gew.-% Toluol.

Eine geeignete Katalysatorlösung stellt man beispielsweise her, indem man in den vorgenannten Gewichtsverhältnissen flüssiges Caprolactam, 2-Pyrrolidon, Polyalkylenglykol sowie Amin mischt und anschließend Natriumalkoholat, z.B. Natriummethylat einträgt. Aus dieser Mischung wird anschließend bei erhöhter Temperatur, z.B. 40 bis 70°C und unter vermindertem Druck, z.B. 5 bis 20 mbar, der bei der Reaktion freiwerdende Alkohol zusammen mit geringen Mengen Lactam abdestilliert. Anschließend wird das so erhaltene Gemisch in der angegebenen Menge eines aromatischen Kohlenwasserstoffs verdünnt. Die Ausgangsstoffe haben vorteilhaft einen Wassergehalt < 200 mg/kg, insbesondere < 100 mg/kg.

Die erfindungsgemäße Katalysatorlösung wird vorteilhaft zur anionischen Polymerisation von Caprolactam, z.B. in Mengen von 8 bis 12 Gew.-%, bezogen auf Caprolactam verwendet. Hierbei werden vorteilhaft Aktivatoren wie Säurechloride, Isocyanate, substituierte Harnstoff, Urethane oder Guanidine mitverwendet. Die Polymerisation wird beispielsweise so durchgeführt, daß man Caprolactam, enthaltend Katalysatorlösung einer Temperatur von 120 bis 130°C und Caprolactam, enthaltend einen Aktivator mit einer Temperatur von 120 bis 130°C bei einer Temperatur von 150°C intensiv mischt. Die Polymerisation beginnt sofort unter Temperaturerhöhung. Als Polymerisationsende wird angenommen, der Zeitpunkt an dem keine weitere Temperaturerhöhung registriert wird.

Die erfindungsgemäße Katalysatorlösung sei an folgenden Beispielen veranschaulicht.

### Beispiel 1

In einem Rührgefäß wurden 514 g flüssiges Caprolactam mit 64,2 g 2-Pyrrolidon, 241,6 g Polyethylenglykol mit einem Molekulargewicht von 300 sowie 23 g 4,4'-Diaminodicyclohexylmethan vermischt. Anschließend wurde in das flüssige Gemisch 126 g Natriummethylat pulverisiert eingetragen und gut vermischt. Aus dieser Mischung wurde anschließend bei 60°C und unter einem Druck von 5 mbar das freiwerdende Methanol abdestilliert. Nach Entfernen des Methanols wurde das so erhaltene Gemisch mit 465,2 g Toluol vermischt.

Die so erhaltene Lösung war nach Lagerung von 100 Tagen bei +2°C flüssig. Unter Verwendung der Katalysatorlösung gelingt die Polymerisation von Caprolactam ausgehend von 150°C innerhalb von 150 Sekunden. Das erhaltene Polycaprolactam hatte einen Extraktgehalt von 2,2 Gew.-%.

### Vergleichsbeispiel

Eine Katalysatorlösung aus 42,8 Gew.-% Caprolactam mit einem Gehalt von 3,9 Gew.-% Natrium in Form von Natriumcaprolactamat, 42,8 Gew.-% Pyrrolidon sowie 10,5 Gew.-% Hexanol verbleibt zwar bei einer Lagerung von 100 Tagen bei Raumtemperatur flüssig, verfestigt sich jedoch bei eintägiger Lagerung bei +20°C. Bei der Polymerisation von Caprolactam unter Verwendung einer solchen Lösung wurde eine Polymerisationszeit von 406 Sekunden ermittelt und ein Polymerisat mit einem Extraktgehalt von 3,1 Gew.-% erhalten.

## Patentansprüche

1. Katalysatorlösung für die anionische Polymerisation von Lactamen, enthaltend als wesentliche Bestandteile 30 bis 45 Gew.-% eines Lactams mit mindestens 7 Ringgliedern mit einem Gehalt an Alkalimetall von 3 bis 5 Gew.-% in Form eines Alkalilactamats,
3 bis 8 Gew.-% 2-Pyrrolidon,
15 bis 20 Gew.-% Poly-C₂- bis C₄-alkylenglykol mit einem Molekulargewicht von 250 bis 350,
bis zu 5 Gew.-% eines primären und/oder sekundären Mono- und/oder Polyamins mit einem Siedepunkt unter Normaldruck oberhalb 250°C, und
bis zu 40 Gew.-% eines aromatischen Kohlenwasserstoffs mit einem Siedepunkt von 80 bis 145°C,
wobei die Summe der Gewichtsprozente sich jeweils auf 100 ergänzt.

2. Katalysatorlösung nach Anspruch 1, enthaltend 35 bis 40 Gew.-% Caprolactam mit einem Gehalt von 3 bis 4 Gew.-% Natrium in Form von Natriumlactamat
4 bis 6 Gew.-% 2-Pyrrolidon
16 bis 20 Gew.-% Polyethylenglykol mit einem mittleren Molekulargewicht von 250 bis 350
1,5 bis 2,5 Gew.-% 4,4'-Diaminodicyclohexylmethan und
bis zu 38,5 Gew.-% Toluol.

3. Verwendung von Katalysatorlösungen nach den Ansprüchen 1 und 2 für die anionische Polymerisation von Caprolactam.

## Claims

1. A catalyst solution for the anionic polymerization of lactams containing as essential ingredients from 30 to 45% by weight of a lactam having at least 7 ring members with a content of alkali metal from 3 to 5% by weight in the form of an alkali metal lactamate,
from 3 to 8% by weight of 2-pyrrolidone,
from 15 to 20% by weight of a poly-C₁-C₄-alkylene glycol having a molecular weight from 250 to 350,
up to 5% by weight of a primary and/or secondary mono-and/or polyamine having an atmospheric pressure boiling point above 250°C, and
up to 40% by weight of an aromatic hydrocarbon having a boiling point from 80 to 145°C,
the sum of the weight percentages adding up to 100 in each case.

2. A catalyst solution as claimed in claim 1 containing from 35 to 40% by weight of caprolactam with a content from 3 to 5% by weight of sodium in the form of sodium lactamate,
from 4 to 6% by weight of 2-pyrrolidone,
from 16 to 20% by weight of polyethylene glycol having an average molecular weight from 250 to 350,
from 1.5 to 2.5% by weight of 4,4'-diaminodicyclohexylmethane, and
up to 38.5% by weight of toluene.

3. The use of catalyst solutions as claimed in claims 1 and 2 for the anionic polymerization of caprolactam.

## Revendications

1. Solution de catalyseur pour la polymérisation anionique de lactames, contenant, à titre de constituants essentiels,
30 à 45% en poids d'un lactame au moins heptagonal, d'une teneur en métal alcalin de 3 à 5% en poids, sous forme d'un lactamate de métal alcalin,
3 à 8% en poids de 2-pyrrolidone,
15 à 20% en poids de polyalkylène(C₁-C₄)glycol d'un poids moléculaire de 250 à 350,
jusqu'à 5% en poids d'une mono- et/ou polyamine primaire et/ou secondaire, d'un point d'ébullition à la pression normale supérieur à 250°C et
jusqu'à 40% en poids d'un hydrocarbure aromatique d'un point d'ébullition de 80 à 145°C, ou la somme des pourcentages pondéraux parfait à chaque fois 100.

2. Solution de catalyseur suivant la revendication 1, contenant
5 à 40% en poids de caprolactame d'une teneur en sodium de 3 à 5% en poids, sous forme de lactamate de sodium,
4 à 6% en poids de 2-pyrrolidone,
16 à 20% en poids de polyéthylèneglycol d'un poids moléculaire moyen de 250 à 350,
1,5 à 2,5% en poids de 4,4'-diaminodicylohexylméthane et
jusqu'à 38,5% en poids de toluène.

3. Utilisation de solutions de catalyseur suivant les revendications 1 et 2 pour la polymérisation anionique du caprolactame.
